# EUROPÄISCHE PATENTANMELDUNG

(11) **EP 0 591 681 A1**
(43) Veröffentlichungstag der Anmeldung: **13.04.1994**
(21) Anmeldenummer: 93114126.1
(22) Anmeldetag: 03.09.1993
(51) Int. Cl.: C08J 7/04, C09D 175/04, B05D 5/06, C08L 23/12

(54) **Verfahren zur Beschichtung von Kunststoffsubstraten mit Uni- und Effektbasislacken**

(30) Priorität: 08.09.1992 DE 4229938
(71) Anmelder: Herberts Gesellschaft mit beschränkter Haftung, D-42285 Wuppertal (DE)
(72) Erfinder: Laux, Wolfgang, D-50969 Köln (DE); Krauthäuser, Helmut, D-50829 Köln (DE); Woth, Stefanie, D-51381 Leverkusen (DE)
(74) Vertreter: Türk, Gille, Hrabal, Leifert

(57) **Zusammenfassung**

Beschrieben wird ein Verfahren zur Uni- oder Effektlackierung von bis zu 100 Gew.-% aus Polypropylen bestehenden Kunststoffsubstraten unter Verwendung von Farbpigmente und/oder Effektpigmente enthaltenden Basislacken. Die Basislacke ergeben eine gute Haftung auf den Kunststoffen. Die verwendeten Basislacke enthalten
5,0 - 35 Gew.-% wasserverdünnbare Bindemittel auf der Basis von physikalisch trocknenden Kunstharzdispersionen,
0,5 - 15 Gew.-% eines chlorierten Polyolefins mit einem Chlorgehalt von 5 - 70 Gew.-%,
0,2 - 20 Gew.% eines oder mehrerer Pigmente,
30 - 89 Gew.-% Wasser und
5,0 - 40 Gew.-% organische Lösemittel.

## Beschreibung

Die Erfindung betrifft ein Verfahren zur direkten Beschichtung von Kunststoffsubstraten mit Uni- oder Effektbasislacken. Bei diesem Verfahren können Kunststoffsubstrate, die insbesondere aus bis zu 100 Gew.-% Polypropylen bestehen, ohne daß vorher der Auftrag einer Haftgrundierung notwendig ist, verwendet werden.

In der Industrie werden heute zunehmend Formteile auf Kunststoffbasis verwendet, die zusammen mit Metallteilen eingesetzt werden sollen und einer Lackierung bedürfen. Dies gilt insbesondere für Kraftfahrzeugteile, die in zunehmendem Maße aus Kunststoffen angefertigt werden, wie Stoßfängerverkleidungen, Spoiler, Schweller, Radhausverkleidungen und seitliche Verkleidungen bzw. Schutzleisten. Für derartige Formteile werden in zunehmendem Maße sogenannte Polypropylenblends, mit einem Polypropylengehalt von mehr als 50 Gew. -% bezogen auf den Kunststoffanteil, verwendet. Solche Teile werden derzeit in Uni-Kontrastfarbtönen, in Uni-Karosseriefarbtönen mit Lacken auf Lösemittelbasis und in Effekt-Karosseriefarbtönen sowie in Effekt-Kontrastfarbtönen unter vorheriger Verwendung einer Grundierung beschichtet. Aus verschiedenen Gründen ist es wünschenswert, ohne Grundierung zu arbeiten.

Geeignete Lacke für Uni-Farbtöne sowie Effekt-Kontrastfarbtöne müssen so formuliert werden, daß sie folgenden Anforderungen genügen: gute Haftung des Decklacksystems (Uni-Decklack bzw. Uni- oder Effekt-Basislack), direkt auf der Kunststoffoberfläche und zwar ohne chemische Vorbehandlung bei niedrigem Elastizitätsmodul des Kunststoffs von unter 900 MPa und mit chemischer Vorbehandlung, nämlich beispielsweise Beflammen, Corona- und Plasmavorbehandlung, bei vielen Polypropylenblends mit einem Elastizitätsmodul von über 600 MPa.

Aus Gründen des Umweltschutzes wird es immer wichtiger, zum Lackieren Wasserlacke zu verwenden. Lackaufbauten ohne Grundierung erlauben wirtschaftliches Beschichten. Bisher war es jedoch nicht möglich, mit Wasserbasislacken bei Uni- und Effektfarbtönen, das heißt solchen Lacken, die Pigmente wie Metallpigmente oder Pigmente auf der Basis von Glimmerplättchen sowie Farbpigmente enthalten und die überwiegend Wasser als flüchtigen Bestandteil enthalten, ohne vorherige Grundierung des Kunststoffteils vor der Decklackierung zu arbeiten.

So war es bisher zur Lackierung von Kunststoffteilen notwendig, mit konventionellen Grundierungen auf Lösemittelbasis, die einen Gehalt an chlorierten Polyolefinen zur Haftverbesserung aufweisen konnten, zu arbeiten. Auf derartige Grundierungen wurden dann Basis- und Klarlackschichten aufgebracht. Die Lackierung von Kunststoffteilen erfolgte somit im Dreischicht-Aufbau.

Aufgabe der Erfindung ist die Bereitstellung eines Verfahrens zur Beschichtung von Kunststoffsubstraten, die Polypropylen enthalten oder aus Polypropylen bestehen, mit Effekt- oder Uni-Basislacken auf Wasserbasis. Diese Effekt- oder Uni-Basislacke sollen einerseits eine gute Haftung auf dem Kunststoffuntergrund und andererseits eine gute Ausrichtung der Effektpigmente ermöglichen, so daß eine breite Effekt-Farbtonpalette ermöglicht wird.

Es hat sich gezeigt, daß diese Aufgabe gelöst werden kann durch Bereitstellung eines Verfahrens zur Uni- oder Effektlackierung von bis zu 100 Gew.-% aus Polypropylen bestehenden Kunststoffsubstraten mit Farbpigmente und/oder Effektpigmente enthaltenden Lacken, das dadurch gekennzeichnet ist, daß man direkt auf das Kunststoffsubstrat einen wäßrigen Uni- oder Effekt-Basislack, enthaltend
5,0 - 30 Gew.-% eines oder mehrerer wasserverdünnbarer Bindemittel, das vollständig oder teilweise auf mindestens einer physikalisch trocknenden Kunstharzdispersionen basiert, bezogen auf den Festkörper der wasserverdünnbaren Bindemittel,
0,5 - 15 Gew.-% eines oder mehrerer chlorierter Polyolefine mit einem Chlorgehalt von 5 - 70 Gew.-%, bezogen auf den Festkörper des chlorierten Polyolefins,
0,2 - 20 Gew.-% eines oder mehrerer Pigmente,
30 - 89 Gew.-% Wasser und
5,0 - 40 Gew.-% eines oder mehrerer organischer Lösemittel
aufbringt und nach Ablüften oder Wärmetrocknung mit einem üblichen Klarlack überlackiert und anschließend gemeinsam unter Erwärmen aushärtet.

Die Erfindung betrifft auch die Verwendung der für das vorstehend beschriebene Verfahren eingesetzten Überzugsmittel zur direkten Beschichtung von Kunststoffsubstraten.

In den erfindungsgemäß eingesetzten Überzugsmitteln werden ein oder mehrere chlorierte Polyolefine mit einem Chlorgehalt von 5 - 70 Gew.-%, bevorzugt von 5 - 45 Gew.-%, bezogen auf den Festkörper des chlorierten Polyolefins eingesetzt.

Die erfindungsgemäß eingesetzten Überzugsmittel enthalten 5,0 - 40 Gew.-% eines oder mehrerer organischer Lösemittel, von denen bevorzugt mindestens 5 Gew.-% (bezogen auf den gesamten Basislack) der Gruppe der aliphatischen und/oder aromatischen Kohlenwasserstoffe zugehört.

Die erfindungsgemäß verwendeten Basislacke enthalten als Bindemittel ein oder mehrere wasserverdünnbare Bindemittel auf der Basis von physikalisch trocknenden Kunstharzdispersionen.

Unter physikalisch trocknender Kunstharzdispersion werden bevorzugt Polyacrylharz-Dispersionen, acrylierte Polyester oder Polyurethanharze in Dispersionsform oder Polyurethanharnstoff-Dispersionen verstanden. Solche physikalisch trocknende Dispersionen sind dem Fachmann geläufig.

Die physikalisch trocknenden Kunstharzdispersionen können teilweise weitere Kunstharze enthalten, die nach Neutralisation von ionisierbaren Gruppen, z.B. Carboxylgruppen, mit geeigneten Neutralisationsmitteln, z.B. Aminen, wasserverdünnbar sind. Es können auch wasserverdünnbare Harze, z.B. Aminoharze, beispielsweise vom Typ Hexamethoxymethylmelamin enthalten sein, die mit den weiteren Kunstharzen unter Wärmeeinwirkung vernetzen. Der Anteil der weiteren Harze in den Kunstharzdispersionen kann beispielsweise bis zu 60 Gew.-% oder mehr, bezogen auf den Festkörpergehalt der gesamten Bindemittel, betragen.

Die bevorzugt eingesetzten wasserverdünnbaren anionischen Polyurethanharnstoff-Dispersionen haben beispielsweise eine Säurezahl von 5 - 50, bevorzugt über 10 und unter 30, einen Festkörper von 10 - 50 Gew.-%, bevorzugt über 25 und unter 45 Gew.-% und eine zahlenmittlere Molmasse (Mn) von 50000 - 500000, gemessen durch Gelpermeations-Chromatographie in Dimethylformamid geeicht mit Polystyrol-Fraktionen. Die Dispersion kann nach bekannten Verfahren wie z.B. in der DE-A-26 24 442, DE-A-32 101 051 oder DE-A-35 45 618 beschrieben, in mehreren Stufen hergestellt werden, wobei z.B. wie folgt verfahren werden kann:
1. Herstellung eines Isocyanat-Präpolymeren aus
   a) einem carboxylgruppenfreien Polycaprolactondiol, Polycarbonatdiol oder Polyesterdiol mit einer Molmasse von 500 - 5000, beispielsweise aus Adipinsäure und Butandiol-1.4,
   b) einer der Säurezahl des Endprodukte entsprechenden Menge an Dihydroxyalkancarbonsäure, bevorzugt Dimethylolpropionsäure,
   c) einem oder mehreren aliphatischen, alicyclischen oder aromatischen Diisocyanaten, beispielsweise Isophorondiisocyanat, Hexamethylendiisocyanat, Bis-cyclohexylmethan-diisocyanat oder Tetramethylxylylen-diisocyanat und
   d) gegebenenfalls Alkandiolen und/oder Trialkoholen wie beispielsweise Hexandiol, Neopentylglykol oder Trimethylolpropan, wobei das Äquivalentverhältnis von OH zu NCO-Gruppen 1 : 1 bis 1 : 1,3 beträgt.
2. Dispergieren des anionischen NCO-Präpolymeren in Wasser nach Neutralisation seiner Carboxylgruppen mit bevorzugt tertiären Aminen wie Triethylamin.
3. Kettenverlängerung mit reaktiven Polyaminen, beispielsweise Ethylendiamin, Propylendiamin, Hexandiamin, Isophorondiamin oder Hydrazin und seinen Derivaten, wobei das Verhältnis von reaktiven NH-Gruppen zu NCO-Gruppen bevorzugt 0,9 : 1 bis 1 : 1 ist.

Die Polyaddition kann z.B. bei Temperaturen von 20 bis 150°C, bevorzugt von 45 bis 90°C, gegebenenfalls unter Zusatz von Katalysatoren, erfolgen. Sie wird bevorzugt nach raschem Mischen unter gutem Rühren in der Schmelze oder nach Verdünnen mit trockenen Lösemitteln durchgeführt. Diese dürfen nicht mit dem Isocyanat reagieren, sind beispielsweise Aceton oder Methylethylketon und können nach der Dispersionsherstellung abdestilliert werden. Sie können aber auch, wie z.B. N-Methylpyrrolidon oder Dimethylformamid, im Prozeß verbleiben. Die zahlenmittlere Teilchengröße der Polyurethanharnstoff-Dispersion liegt bevorzugt zwischen 50 und 500 nm, besonders bevorzugt über 100 und unter 300nm.

Die Polyurethan-Dispersion bzw. die Polyurethanharnstoff-Dispersion aber auch die Dispersionen anderer wasserverdünnbarer Kunstharze können beispielsweise durch Einbau von blockierten Isocyanatgruppen oder durch Reaktion mit Formeldehyd selbstvernetzend gemacht werden. Andererseits können jedoch auch bis zu 30 Gew.-%, bevorzugt unter 20, besonders bevorzugt unter 10 Gew.-% Formaldehyd-Kondensationsharze, speziell vollveretherte Melaminharze oder nichtvergilbende, blockierte Polyisocyanate als Vernetzer zugemischt werden. Beispielsweise geeignet sind Aminoharze, z.B. vom Typ Hexamethoxymethylmelamin, die selbst wasserverdünnbar sind.

Die erfindungsgemäß eingesetzten chlorierten Polyolefine weisen einen Chlorgehalt von 5 - 70 Gew.-%, bevorzugt von 5 - 45 Gew.-% auf. Ihre Viskosität, gemessen als 20 Gew.-%-Lösung in Xylol bei 25°C, beträgt bevorzugt 10 - 200 mPas. Wenn sie in organischer Lösung vorliegen, können sie erfindungsgemäß aus der organischen Lösung in eine heterogene Mischung von organischer und wäßriger Phase überführt werden. Dabei wird bevorzugt mit Wasser eine Emulsion des Chlorpolyolefins als separate Vorstufe, gegebenenfalls unter Verwendung von üblichen Netzmitteln, erzeugt.

Unter chlorierten Polyolefinen werden beispielsweise die Chlorierungsprodukte von gesättigten oder ungesättigten, bevorzugt gesättigten C₂ - C₆ - Polykohlenwasserstoffen mit einem Chlorgehalt von 5 - 70 Gew.-%, bevorzugt über 10, besonders bevorzugt über 20 und bevorzugt unter 50, besonders bevorzugt unter 40 Gew.-% verstanden. Sie werden vorzugsweise hergestellt durch Chlorierung von Polyethylen, Polypropylen, Polybutylen, Polyisobutylen, Polybutadien oder Polyvinylchlorid oder durch Polymerisation von ungesättigten Chlorkohlenwasserstoffen wie beispielsweise Chloropren. Durch Reaktion von Chlor und Chlorsulfonsäure mit Polyethylen oder Polypropylen in Lösung können entsprechende chlorsulfonierte Produkte hergestellt werden, die nach Hydrolyse in Wasser gut emulgierbar sind. Der Gehalt an Sulfonsäuregruppen solcher verwendbarer chlorsulfonierten Produkte sollte so niedrig wie möglich sein, um eine Wasserverdünnbarkeit im System zu gewährleisten. Die Säurezahl des Polyolefins liegt z.B. unter 30, bevorzugt unter 20, besonders bevorzugt unter 10. Aufgrund seiner besonderen Eigenschaften wird chloriertes Polyethylen oder chloriertes Polypropylen bevorzugt. Die erfindungsgemäß eingesetzten chlorierten Polyolefine haben bevorzugt eine zahlenmittlere Molmasse (Mn) von 15000 - 60000, bevorzugt unter 40000 und bevorzugt über 20000, gemessen durch Gelpermeationschromatographie, geeicht mit Polystyrol. Ihre Viskosität, gemessen als 20%ige Lösung in Xylol, liegt bei 25°C, bevorzugt zwischen 1 und 500 mPas, besonders bevorzugt über 10 und unter 200 mPas. Das chlorierte Polyolefin wird entweder lösemittelfrei als wäßrige Emulsion zugemischt oder als organische Lösung in die Dispersion eingearbeitet, wobei eine heterogene Mischung von organischer und wäßriger Phase entsteht. Dabei wird bevorzugt mit Wasser eine Emulsion der chlorierten Polyolefin-Lösung als separate Vorstufe, gegebenenfalls unter Verwendung von üblichen Netzmitteln, erzeugt.

Die erfindungsgemäß verwendeten Basislacke enthalten 0,2 bis 20 Gew.-% eines oder mehrerer Pigmente. Es kann sich dabei um Effekt- und/oder Farbpigmente handen. Werden Effektpigmente verwendet, so werden diese bevorzugt in einer Menge von 0,2 bis 10 Gew.-% verwendet, Farbpigmente bevorzugt in Mengen von 0,3 - 20 Gew.-%, jeweils bezogen auf den genannten Basislack.

Als Effektpigmente können in den erfindungsgemäß verwendeten Basislacken übliche Effektpigmente wie beispielsweise Metallicpigmente oder Effektpigmente auf der Basis von Glimmerplättchen bzw. Micaplättchen eingesetzt werden. Statt der Effektpigmente oder neben den Effektpigmenten können die erfindungsgemäßen Basislacke auch übliche Farbpigmente enthalten. Solche Farbpigmente, die in wäßrigen Lacken eingesetzt werden können, sind dem Fachmann geläufig und werden beispielsweise in der DIN 55 944 beschrieben. Das ist von Bedeutung, wenn Kunststoffteile in verschiedenen Metallic-, Uni- oder anderen Effektfarbtönen in einem einheitlichen Basislacksystem mit möglichst gleichen Verarbeitungsbedingungen beschichtet werden sollen.

Mindestens 5 Gew.-% des erfindungsgemäß verwendeten Basislackes sind organische Lösemittel, insbesondere mit Wasser wenig mischbare Lösemittel, insbesondere aus der Gruppe der aliphatischen oder bevorzugt aromatischen Kohlenwasserstoffe. Diese Lösemittel sind nicht mit Wasser mischbar und können aufgrund ihres guten Lösevermögens für Chlorpolyolefine mit dem erfindungsgemäßen Chlorgehalt in dem erfindungsgemäßen Überzugsmittel als Lösung der Chlorpolyolefine eingebracht werden. Weiterhin kann diese Lösungsphase wegen ihres unpolaren Charakters eine bevorzugte Benetzung der unpolaren Polypropylenoberfläche mit Chlorpolyolefin bewirken.

Als weitere organische Lösemittel können gegebenenfalls lackübliche Lösemittel zugesetzt werden, beispielsweise solche, wie sie bei der Herstellung der Bindemittel verwendet werden oder wie sie zur Herstellung eines glatten Verlaufs von Lacken zugesetzt werden. Es handelt sich hierbei bevorzugt um wasserlösliche Lösemittel wie beispielsweise niedrigmolekulare Alkohole wie Ethanol, Propanol, Isobutanol, n-Butanol, Amylalkohol, Mono- oder Diglykole wie Ethylenglykol, Propylenglykol, Mono- und Diglykol- oder -propylenglykolmono- oder-diether wie Butoxyethanol, Methoxypropanol, Ethoxypropanol, Ether wie Diethoxymethan oder Tetrahydrofuran, N-Methylpyrrolidon oder Dimethylformamid. Der gesamte Lösemittelgehalt der erfindungsgemäßen wäßrigen Überzugsmittel kann beispielsweise bis zu 40 Gew.-% betragen. Er liegt bevorzugt unter 20 Gew.-%, besonders bevorzugt unter 10 Gew.-% im spritzfähigen Lack.

Zur Einstellung der Verarbeitbarkeit, z.B. der Spritzviskosität und der Lagerstabilität ist es günstig, einen geeigneten pH-Wert des wäßrigen Lacks einzustellen. Er liegt im allgemeinen z.B. zwischen 7 und 8,5, bei Einsatz von Aluminium-Bronzen bevorzugt zwischen 7,2 und 8. Die pH-Wert-Einstellung erfolgt durch Zusatz von z.B. Ammoniak, primären, sekundären oder tertiären Alkyl- oder Alkanolaminen wie beispielsweise Diethylamin, Triethylamin, n-Butylamin, Methylenaminoethanol, Dimethylaminoethanol, Triethanolamin, Aminoethanol, Dimethylaminoisopropanol, Diisopropanolamin, Morpholin, N-Methylmorpholin, 2-Amino-2-methylpropanol-1, 2-Dimethylamino-2-methylpropanol-1. Die Menge an Neutralisationsmittel soll bevorzugt - bezogen auf das Bindemittel - die zu in dem Bindemittel vorhandenen Carboxylgruppen äquivalente Menge nicht überschreiten. Gegebenenfalls durch das Pigment adsorbierte Aminmengen sind dabei nicht berücksichtigt und können zu einem höheren Neutralisationsgrad führen.

Durch die Erfindung wird erstmals ein Basislack bereitgestellt, der auf Polypropylen haftet, Metallpigmente enthalten kann, als flüchtige Anteile überwiegend Wasser enthält, frei von in Lösemitteln gelösten Acrylharzen oder Celluloseacetobutyrat sein kann und chlorierte Polyolefine in organischer Phase bzw. einer Mischung aus wäßriger Phase und organischer Phase enthält, wobei die organische Phase vorzugsweise auch organische Lösemittel enthält, die nicht in jedem Verhältnis mit Wasser mischbar sind.

Die erfindungsgemäß eingesetzten Uni- bzw. Effekt-Basislacke sind besonders geeignet für die Lackierung von Kunststoffteilen, insbesondere Kraftfahrzeugteilen, die entweder aus Polypropylen bestehen oder einen Polypropylengehalt aufweisen. Derartige Polypropylenblends weisen bevorzugt einen Gehalt von 40 - 100 Gew.-% Polypropylen und von 0 - 60 Gew.-% beliebiger anderer Polymerer auf, wie sie z.B. zur Herstellung von Polypropylen enthaltendem Kunststoffsubstrat üblicherweise eingesetzt werden.

Besonders geeignet ist der erfindungsgemäß verwendete Basislack zur Beschichtung von Kraftfahrzeugteilen aus derartigen Kunststoffen. Durch Einsatz der erfindungsgemäßen Wasser-Basislacke ergibt sich dabei der Vorteil umweltfreundlicher Beschichtung und einer guten Haftung der Lacke auf den Kunststoffsubstraten direkt. Eine Vorlackierung bzw. Grundierung der Kunststoffsubstrate, wie sie beim Stand der Technik unerläßlich war, ist nicht nötig.

Als weiterer Vorteil der erfindungsgemäß verwendeten Basislacke ergibt sich die Möglichkeit einer weitgehenden Abstimmung des erzielten Effekt-Farbtones mit dem von Lackierungen auf Metallteilen, die zusammen mit den lackierten Kunststoffteilen eingesetzt werden sollen, beispielsweise im Kraftfahrzeugbau. Durch die erfindungsgemäß spezielle Zusammensetzung von Effekt-Basislacken wird die Orientierung von Effektpigmenten in den Lackzusammensetzungen nicht beeinträchtigt, so daß ein ausgezeichneter Flop-Effekt sowie die Abstimmung verschiedener Helligkeits- und Brillanzeffekte möglich sind.

Die erfindungsgemäß verwendeten Uni- oder Effekt-Basislacke können mittels üblicher Auftragsverfahren auf die zu lackierenden Substrate aufgebracht werden, beispielsweise durch Spritzauftrag, wie Druckluft- oder Rotationszerstäubungs-Auftragsverfahren.

Nach dem Auftrag kann bei Raumtemperatur oder durch Erwärmen, beispielsweise auf Temperaturen von 20 bis 100°C, vorgetrocknet werden.

Auf das so vorgetrocknete Material kann ein üblicher Klarlack aufgetragen und bei Raumtemperatur oder Temperaturen von 20 bis 100°C getrocknet werden. Geeignete Klarlacke zur Überlackierung der erfindungsgemäßen Uni- oder Effekt-Basislacke (gegebenenfalls nach kurzer Ablüftungszeit) sind alle üblichen Klarlacke, wie sie beispielsweise in der Kraftfahrzeuglackierung eingesetzt werden. Beispiele sind 2-Komponenten-Systeme auf der Basis von isocyanathärtenden Acryl- oder Polyesterklarlacken.

Die folgenden Beispiele erläutern die Erfindung. Prozentangaben beziehen sich, sofern nicht anders angegeben, auf das Gewicht.

### Beispiel 1

### Herstellung eines Basislacks:

50 Gew.-% einer Polyurethandispersion, 30%ig in Wasser und organischen Lösemitteln (Handelsprodukt Albotan 061) und
1 Gew.-% eines Farbpigments (Handelsprodukt Farbruß FW 200) wurden 20 min. unter dem Dissolver vordispergiert, anschließend wurde dieses Gemisch 45 min. in einer Perlmühle dispergiert. Anschließend wurden
30 Gew.-% einer Dispersion, bestehend aus
6 Gew.-% Chlorpolyolefin, 9 Gew.-% organischem Lösemittel, 15 Gew.-% Wasser zugesetzt und verrührt. Separat wurden 3 Gew.-% Effektpigmente in Form einer Paste, bestehend aus 65 Gew.-% Pigment und 35 Gew.-% organischem Lösemittel mit 4 Gew.-% Butyldiglycol angeteigt und glattgerührt.
Diese Mischung wurde dem vorstehenden Gemisch unter Rühren zugegeben. Anschließend wurde diesem Gemisch
5 Gew.-% eines Stabilisierungsmittels auf der Basis von Acrylcopolymerisat (Handelsprodukt Viscalex HV 30) 30 % in Wasser unter Rühren zugesetzt.
11 Gew.-% vollentsalztes Wasser wurden zur Einstellung der Verarbeitungsviskosität eingerührt.

### Beispiel 2

### A) Lackierung von Kunststoffsubstraten:

Platten aus Polypropylen-Ethylen-Propylen-Dien-Mischpolymerisat (Handelsprodukt Moplen SP 150) werden einer Handreinigung mit Isopropanol unterzogen und mit Druckluft (4 - 6 bar) abgeblasen, bis sie trocken und staubfrei sind.

Der Effektlack nach Beispiel 1, eingestellt mit vollentsalztem Wasser auf eine Applikationsviskosität von 17 - 35 sek. AK 4/20 c (DIN 53 211), wird mit einer Fließbecherpistole mit einer Düse von 1,2 mm unter einem Druck von 4 - 6 bar aufgebracht. Die Lackierung erfolgt in zwei Spritzgängen von jeweils 7 µm Trockenschichtstärke. Anschließend wird bei Raumtemperatur 8 - 10 min. abgelüftet.

### B) Auftrag eines Klarlacks:

Nach dem Ablüften wird ein handelsüblicher Zweikomponenten-Klarlack auf Acrylbasis (2K-Standocryl-Klarlack) mit der Fließbecherpistole mit einer Düse von 1,3 mm bei einem Druck von 4 - 6 bar in zwei Spritzgängen aufgetragen. Die erzielte Trockenschichtstärke beträgt 30 µm.

### C) Tests:

Die erhaltenen lackierten Platten werden einer Ofenalterung während 48 Stunden bei 60 CEL unterzogen. Anschließend wird eine Haftungsprüfung nach DIN 53 151 + Klebeband-Abriß (Tesaband 4651 der Firma Beiersdorf) durchgeführt. Das Gitterschnittbild nach dem Abriß des Klebebandes hat den Kennwert GT 0 (das heißt, es erfolgte keine Enthaftung).

Nach einem Feuchtwarm-Test von 240 Stunden (DIN 50 017) wurden die Prüflinge hinsichtlich des erhaltenen Blasengrades (DIN 53 209) beurteilt. Der Beurteilungsgrad war 0/0 m/g; es traten keine Blasen auf. Die anschließende erneute Haftungsprüfung (Gittschnitt + Klebeband-Abriß) ergab den Wert GT 0 (das heißt, ebenfalls keine Enthaftung).

## Patentansprüche

1. Verfahren zur Uni- oder Effekt-Lackierung von bis zu 100 Gew.-% aus Polypropylen bestehenden Kunststoffsubstraten mit Farbpigmente und/oder Effektpigmente enthaltenden Lacken, **dadurch gekennzeichnet**, daß man direkt auf das Kunststoffsubstrat einen wäßrigen Uni- oder Effekt-Basislack, enthaltend
5,0 - 30 Gew.-% eines oder mehrerer wasserverdünnbarer Bindemittel, das vollständig oder teilweise auf mindestens einer physikalisch trocknenden Kunstharzdispersionen basiert, bezogen auf den Festkörper der wasserverdünnbaren Bindemittel,
0,5 - 15 Gew.-% eines oder mehrerer chlorierter Polyolefine mit einem Chlorgehalt von 5 - 70 Gew.-%, bezogen auf den Festkörper des chlorierten Polyolefins,
0,2 - 20 Gew.-% eines oder mehrerer Pigmente,
30 - 89 Gew.% Wasser und
5,0 - 40 Gew.-% eines oder mehrerer organischer Lösemittel
aufbringt und nach Ablüften oder Wärmetrocknung mit einem üblichen Klarlack überlackiert und anschließend gemeinsam unter Erwärmen aushärtet.

2. Verfahren nach Anspruch 1, dadurch gekennzeichnet, daß ein wäßriger Basislack verwendet wird, in dem die Pigmente Effektpigmente und/oder Farbpigmente sind.

3. Verfahren nach Anspruch 1 oder 2, dadurch gekennzeichnet, daß ein wäßriger Basislack verwendet wirde, in dem die organischen Lösemittel ganz oder teilweise eines oder mehrere aliphatische und/oder aromatische Kohlenwasserstoffe sind.

4. Verfahren nach einem der Ansprüche 1 bis 3, dadurch gekennzeichnet, daß Kraftfahrzeugteile aus Kunststoff mit einem Polypropylengehalt von bis zu 100 Gew.-% lackiert werden.

5. Verwendung einer wäßrigen Zusammensetzung, enthaltend
5,0 - 30 Gew.-% eines oder mehrerer wasserverdünnbarer Bindemittel, das vollständig oder teilweise auf mindestens einer physikalisch trocknenden Kunstharzdispersion basiert, bezogen auf den Festkörper der wasserverdünnbaren Bindemittel,
0,5 - 15 Gew.-% eines oder mehrerer chlorierter Polyolefine mit einem Chlorgehalt von 5 - 70 Gew.-%, bezogen auf den Festkörper des chlorierten Polyolefins,
0,2 - 20 Gew.-% eines oder mehrerer Pigmente,
30 - 89 Gew.-% Wasser und
5,0 - 40 Gew.-% eines oder mehrerer organischer Lösemittel,
als Uni- oder Effekt-Basislacke zur direkten Beschichtung von bis zu 100 Gew.-% aus Polypropylen bestehenden Kunststoffsubstraten.

6. Verwendung nach Anspruch 5, wobei die Pigmente Effektpigmente und/oder Farbpigmente sind.

7. Verwendung nach Anspruch 5 oder 6, wobei die physikalisch trocknende Kunstharzdispersion eine Polyurethanharzstoffdispersion ist.

8. Verwendung nach einem der Ansprüche 5 bis 7, wobei die organischen Lösemittel gänzlich oder teilweise ein oder mehrere aliphatische und/oder aromatische Kohlenwasserstoffe sind.

9. Verwendung nach einem der Ansprüche 5 bis 8 zur Lackierung von Kraftfahrzeugteilen aus Kunststoffen mit einem Polypropylengehalt von bis zu 100 Gew.-%.

10. Verwendung nach Anspruch 9 zur Lackierung von Kraftfahrzeug-Außenteilen aus Kunststoffen mit einem Polypropylengehalt von bis zu 100 Gew.-%, mit Metallic-Effektpigmenten, zur Erzielung von Farb- und Metalliceffekten, die Metallic-lackierten Kraftfahrzeug-Metallaußenteilen entsprechen.
